# NEUE EUROPÄISCHE PATENTSCHRIFT

(11) **EP 2 277 761 B2**
(45) Veröffentlichungstag und Bekanntmachung des Hinweises auf die Entscheidung über den Einspruch: **03.01.2018**
(45) Hinweis auf die Patenterteilung: 13.02.2013
(21) Anmeldenummer: 09009665.2
(22) Anmeldetag: 26.07.2009
(51) Int. Cl.: B61C 3/02, B61C 7/04, B61C 17/04

(54) **Diesellokomotive mit Hybrid-Powerpack-Antrieb**
Diesel locomotive with hybrid power drive modules
Locomotive diesel dotée de modules d'entraînement hybrides

(43) Veröffentlichungstag der Anmeldung: 26.01.2011
(73) Patentinhaber: RöschConsult International Ltd., 64354 Reinheim (DE)
(72) Erfinder: Rösch, Wolfgang, 64823 Groß-Umstadt (DE)
(74) Vertreter: Jany, Peter

(56) Entgegenhaltungen:
- EP-A1- 1 186 497
- WO-A2-2008/073353
- DE-A1-102007 049 755
- DE-C- 814 604
- JP-A- 2008 254 587
- US-A1- 2006 091 832
- BERGMANN D. ET AL: 'Bahndieselantriebe von MTU: Saubere und wirtschaftliche Lösungen' JAHRBUCH DES BAHNWESENS 2008/09 2008, Seiten 66 - 69
- SIEMENS Triebzug DESIRO VT 642; Merkmale dieses Triebzugs belegt durch Prospekt SIEMENS "Dieselmechanischer Triebzug DESIRO VT 642 für die Deutsche Bahn AG" und Auszug aus Wikipedia (de.wikipedia.org/wiki/Siemens_Desiro_Class ic) abgerufen am 05.11.2013
- Alstom Triebwagen CORADIA LINT 41 und Prospekt ALSTOM Transport "CORADIA LINT 27 und 41 für die Vectus Verkehrsgesellschaft mbH" sowie als weiteren Beleg für Merkmale des Triebwagens Auszug aus Wikipedia (de.wikipedia.org/wiki/Alstom_Coradia_LINT) abgerufen am 11.11.2013
- MTZreport Vol. 2/2008, Seiten 40-43
- Tognum Presseerklärung "Tognum stellt Bahn-Hybridantrieb vor" vom 24 September 2008 sowie www.suedkurier.de/..., 29.09.2008, "Gut für die Umwelt"
- ERO Autumn 2007, Seiten 10/11, "Voith powerpacks pack punch"
- ETR Eisenbahntechnische Rundschau, Mai 2007, Nr. 5, Seiten 287-293, "Ecopack-Innovatives Antriebskonzept für Schienenfahrzeuge"
- EI-Eisenbahningenieur Dezember 2007, Seite 82, "Hyrid-Antrieb für Dieseltriebwagen"

## Beschreibung

Als Patent geschützt werden soll eine Lokomotive mit einem Antrieb aus Hybrid-Powerpacks, entsprechend den merkmalen des unabhängigen Anspruches 1. Die Lokomotive ist anstelle des bisher üblichen zentralen Dieselmotors und Strömungsgetriebes oder Generators von mehreren, dezentralen Hybrid-Powerpacks (HPP) angetrieben. Ein Hybrid-Powerpack besteht aus Dieselmotor, Getriebe, Elektromotor und Energiespeicher und treibt je einen Radsatz an. Neu ist dabei die Vereinigung des dieselmotorischen Antriebs mit dem Elektrospeicherantrieb in einem kompakten, als komplette Einheit tauschfähigen Powerpack sowie die Anwendung in Schienenfahrzeugen, insbesondere auch in Rangierlokomotiven. Die dazu erforderlichen Komponenten für sich sind bekannt, die Kombination und der Anwendungsfall sind bisher nicht bekannt.

Die Lokomotive bietet folgende Vorteile:
- höhere Redundanz des Antriebs, dadurch höhere Zuverlässigkeit des Fahrzeuges,
- bessere Leistungsanpassungsmöglichkeit durch Start-Stop-Automatik der einzelnen Powerpacks,
- Leerlaufanteile werden reduziert, der einzelne Dieselmotor kann dadurch überwiegend nahe seines Verbrauchsoptimums betrieben werden,
- dadurch besseres Schadstoffverhalten und geringerer spezifischer Kraftstoffverbrauch,
- bessere Instandhaltbarkeit durch leichten Tausch der Powerpacks,
- geringer Achsstand im Drehgestell, besserer Bogenlauf, dadurch weniger Spurkranzverschleiß durch Entfall der Durchkupplung der Achsgetriebe im Drehgestell,
- Unterbringung des kompletten Antriebs unterhalb der Rahmenebene, dadurch bessere Übersichtlichkeit an den Vorbauten, tiefe Schwerpunktlage und niedrige Wankpolhöhe,
- durch den gewonnen Platz oberhalb der Rahmenebene Nutzungsmöglichkeit als selbstfahrendes Nebenfahrzeug mit Möglichkeit der Nutzlastunterbringung,
- Rückgewinnung der Bremsenergie im Energiespeicher und aktive Nutzung für den elektrischen Antrieb,
- dadurch Lärmreduktion und Reduktion des Kraftstoffverbrauchs,
- standardisierte Großserienbauteile, niedrigere Anschaffungs- und Instandhaltungskosten.

Die sich in einem harten Wettbewerb befindlichen Hersteller der konventionellen Lokomotive haben seit mehreren Jahren, in denen die hier beschriebenen Komponenten am Markt verfügbar sind, keine derartige Entwicklung betrieben, obwohl die technischen und wirtschaftlichen Vorteile der Erfindung gegenüber den konventionellen Lokomotiven auf der Hand liegen.

Der bisher bekannte Stand der Technik für Diesellokomotiven geht, wie auch im Rahmen der Recherche in den Dokumenten D1 bis D3 JP 2008 254587A, US 2006/091832A1 und WO 2008/073353A2 dargestellt, von einer oder zwei zentralen Antriebsanlagen aus, die aus mehreren Komponenten wie Dieselmotor, Generator, Strömunggetriebe gebildet werden und über dem Lokomotivrahmen angeordnet sind. Dieser Charakteristik entsprechen alle praktisch ausgeführten, in der Literatur beschriebenen und in Patentschriften dargestellten Lösungen (siehe auch die Dokumente D1 bis D3 aus dem Recherchebericht).

Die beigefügte Abbildung zeigt ein Ausführungsbeispiel einer erfindungsgemassen Lokomotive.

Beispielhafte Beschreibung einer Möglichkeit der konstruktiven Ausführung der HPP-Lokomotive Konstruktionsbeispiel, z.B.: aus Komponenten des Herstellers Voith

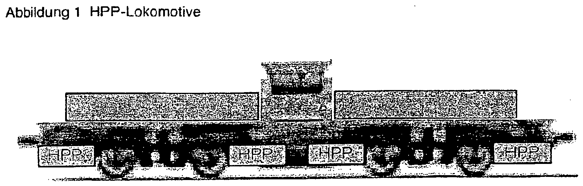

Voith Powerpack für Triebwagen RegioShuttle RS1
+ Voith DIWAhybrid-Getriebe für Busse
+ Voith Drehgestelle, Rahmen, Führerhaus "Gravita"
= HPP-Rangierlok (Abb. 1)

### 5. Technische Daten

- 2x oder 3x oder 4x 315 kW, (630, 945 oder 1260 kW) Standard-Großserienmotor (Triebwagen, Lkw, Bus)
- vmax 100/120 km/h
- Achslast 17,5/20/22,5 t

## Patentansprüche

1. Lokomotive mit einem Rahmen, die von mehreren, dezentralen, unter dem Rahmen der Lokomotive angeordneten, jeweils aus Dieselmotor, Getriebe, Elektromotor, Energiespeicher und Tragrahmen bestehenden Hybrid-Powerpacks (HPP) angetrieben wird, wobei ein Hybrid-Powerpack je einen Radsatz antreibt.

2. Lokomotive nach Anspruch 1, **dadurch gekennzeichnet, dass** für jeden Powerpack jeweils Dieselmotor, Getriebe, Elektromotor und Energiespeicher auf dem Tragrahmen zu einer kompakten Baugruppe vereinigt sind.

3. Lokomotive nach Anspruch 1, **dadurch gekennzeichnet, dass** jeder Radsatz der Lokomotive von einem separaten Powerpack angetrieben wird.

## Claims

1. Locomotive with a frame, which locomotive is driven by several, decentralized hybrid-powerpacks (HPP) which are placed below the frame of the locomotive, each hybrid-powerpack consisting of a diesel engine, a gear, an electric motor, an energy storage unit and a carrier frame, wherein each hybrid-powerpack drives a wheelset.

2. Locomotive according to claim 1, **characterised in that** for each powerpack the respective diesel engine, gear, electric motor and energy storage unit are combined to a compact assembly on the carrier frame.

3. Locomotive according to claim 1, **characterised in that** each wheelset of the locomotive is driven by a separate powerpack.

## Revendications

1. Locomotive avec un châssis-cadre, ladite locomotive étant entraînée par plusieurs hybride powerpacks (HPP) décentralisés qui sont placés sous le châssis-cadre de la locomotive et respectivement sont composés d'un moteur diesel, d'une boîte de vitesses, d'un moteur électrique, d'un accumulateur énergétique et d'un cadre-porteur, chaque hybride powerpack entraînant un essieu.

2. Locomotive selon la revendication 1, **caractérisé en ce que** pour chaque powerpack respectivement le moteur diesel, la boîte de vitesses, le moteur électrique et l'accumulateur énergétique sont réunis sur le cadre-porteur pour former un module compacte.

3. Locomotive selon la revendication 1, **caractérisé en ce que** chaque essieu de la locomotive est entraîné par un powerpack séparé.
